# EUROPEAN PATENT APPLICATION

(11) **EP 3 761 731 A1**
(43) Date of publication of application: **06.01.2021**
(21) Application number: 18913286.3
(22) Date of filing: 04.04.2018
(51) Int. Cl.: H04W 72/04

(54) **COMMUNICATION METHOD, COMMUNICATION APPARATUS, AND SYSTEM**

(71) Applicant: Huawei Technologies Co., Ltd., Longgang District Shenzhen, Guangdong 518129 (CN)
(72) Inventor: ZHANG, Meng, Shenzhen, Guangdong 518129 (CN); LI, Qiming, Shenzhen, Guangdong 518129 (CN); LI, Hong, Shenzhen, Guangdong 518129 (CN); HAN, Jing, Shenzhen, Guangdong 518129 (CN); LIU, Yifan, Shenzhen, Guangdong 518129 (CN)
(74) Representative: Pfenning, Meinig & Partner mbB
(86) International application number: PCT/CN2018/081949
(87) International publication number: WO 2019/191949

(57) **Abstract**

This application provides a communication method, a communications apparatus, and a system. The communication method includes: sending first indication information, where the first indication information is used to indicate that a system bandwidth of a first-type terminal device is a first system bandwidth, and the first system bandwidth is less than or equal to a cell-specific reference signal CRS mitigation bandwidth; and sending second indication information to a second-type terminal device, where the second indication information is used to indicate that a system bandwidth of the second-type terminal device is a second system bandwidth, and the second-type terminal device can support a network-based CRS mitigation technology. According to this application, communication performance of a conventional terminal device and a terminal device that can support a CRS mitigation technology in a network device configured with a network-based CRS mitigation technology can be ensured.

## Description

### TECHNICAL FIELD

This application relates to the communications field, and more specifically, to a communication method, a communications apparatus, and a system.

### BACKGROUND

In the 76^{th} plenary session for 3GPP Radio Access Network (Radio Access Network, RAN), a new topic, namely, a network-based cell-specific reference signal mitigation (Network-based Cell-specific Reference Signal mitigation) technology, is approved, and a standardization process starts. A density of cell-specific reference signals (Cell-specific Reference Signal, CRS) is relatively high, and the cell-specific reference signals occupy a relatively large part of resources in a medium- and low-load cell. Therefore, some interference is caused to a neighboring cell. In this technology, a bandwidth of the CRS is conditionally mitigated to a bandwidth of six central resource blocks (Resource Block, RB), to reduce interference of the medium- and low-load cell to the neighboring cell to some extent, and implement a data transmission gain of a terminal device. In addition, compared with original continuous sending of the CRS, with reduction of a transmit bandwidth of the CRS as required, energy consumption of a base station is also reduced to some extent.

In standardization work, a key point of this topic is that all policies and operations are based on a network side and a behavior of the terminal device does not need to be adjusted. Therefore, when the terminal device needs a full bandwidth CRS to perform channel estimation, a network needs to correspondingly ensure the full bandwidth CRS of these operations. In other words, CRS bandwidth mitigation can be disabled in corresponding time periods or even some margins before and after the time periods, and the CRS is sent by using a full bandwidth, thereby ensuring accuracy of the channel estimation of the terminal device.

However, some terminal devices cannot support the network-based CRS mitigation technology, and impact of mitigating the bandwidth of the CRS by the network on these terminal devices is inevitable.

### SUMMARY

This application provides a communication method, a communications apparatus, and a system, so that communication performance of a conventional terminal device and a terminal device that can support a CRS mitigation technology in a network device configured with a network-based CRS mitigation technology can be ensured.

According to a first aspect, a communication method is provided. The communication method includes: sending first indication information, where the first indication information is used to indicate that a system bandwidth of a first-type terminal device is a first system bandwidth, and the first system bandwidth is less than or equal to a cell-specific reference signal CRS mitigation bandwidth; and sending second indication information to a second-type terminal device, where the second indication information is used to indicate that a system bandwidth of the second-type terminal device is a second system bandwidth, and the second-type terminal device can support a network-based CRS mitigation technology.

According to this embodiment of this application, for a network device configured with a network-based CRS mitigation technology, on one hand, the network device sends indication information indicating a bandwidth of the first-type terminal device (namely, the system bandwidth of the first-type terminal device). The indication information indicates the first system bandwidth that is less than or equal to the CRS mitigation bandwidth, and when the network device is in a CRS mitigated state, the first system bandwidth may be used by a terminal device (namely, the first-type terminal device) that cannot support the network-based CRS mitigation technology for communication by using the first system bandwidth. This avoids an estimation error caused by channel estimation that is performed, based on the system bandwidth, by the terminal device that cannot support the network-based CRS mitigation technology without knowing existence of the CRS mitigation technology. On the other hand, in this embodiment of this application, an actual system bandwidth of a terminal device that can support the network-based CRS mitigation technology (namely, the system bandwidth of the second-type terminal device) is notified by using additional signaling, so that the terminal device that can support the network-based CRS mitigation technology can perform communication based on the actual system bandwidth.

With reference to the first aspect, in some implementations of the first aspect, the communication method further includes: scheduling the second-type terminal device based on the second system bandwidth.

In this embodiment of this application, the network device can know that the second system bandwidth is a working bandwidth provided by the network device. The network device schedules, based on the second system bandwidth, the terminal device (namely, the second-type terminal device) that can support the network-based CRS mitigation technology, thereby ensuring communication performance of the terminal device that can support the network-based CRS mitigation technology.

With reference to the first aspect, in some implementations of the first aspect, the communication method further includes: scheduling the first-type terminal device based on the first system bandwidth.

In this embodiment of this application, the network device can know that the first system bandwidth is different from the working bandwidth provided by the network device. The network device schedules, based on the first system bandwidth, the terminal device (namely, the first-type terminal device) that cannot support the network-based CRS mitigation technology, thereby ensuring that the terminal device that cannot support the network-based CRS mitigation technology performs correct channel estimation in a period in which the network device enables the CRS mitigation technology.

With reference to the first aspect, in some implementations of the first aspect, the second system bandwidth is greater than the first system bandwidth.

With reference to the first aspect, in some implementations of the first aspect, the sending second indication information to a second-type terminal device includes: sending radio resource control RRC information to the second-type terminal device, where the RRC information includes the second indication information; or sending a media access control MAC control element CE to the second-type terminal device, where the MAC CE includes the second indication information; or sending downlink control information DCI to the second-type terminal device, where the DCI includes the second indication information.

When communication of the terminal device that cannot support the network-based CRS mitigation technology is ensured, the terminal device that can support the network-based CRS mitigation technology can learn of the actual system bandwidth by using the additional signaling, so that the terminal device that can support the network-based CRS mitigation technology can perform communication in the actual system bandwidth.

With reference to the first aspect, in some implementations of the first aspect, the first indication information is carried in system information that is broadcast, and the system information is a master information block MIB or a system information block SIB.

With reference to the first aspect, in some implementations of the first aspect, the sending second indication information to a second-type terminal device includes: sending the second indication information to the second-type terminal device in a random access procedure of the second-type terminal device.

In this embodiment of this application, after receiving the first indication information, the terminal device that can support the network-based CRS mitigation technology temporarily works in the first system bandwidth indicated by the first indication information. After the network device sends, to the terminal device that can support the network-based CRS mitigation technology, the indication information indicating the second system bandwidth, the terminal device that can support the network-based CRS mitigation technology works in the second system bandwidth. Therefore, when the terminal device that can support the network-based CRS mitigation technology performs random access, the network device sends the second indication information to the terminal device that can support the network-based CRS mitigation technology, so that the terminal device that can support the network-based CRS mitigation technology can work based on the actual system bandwidth after accessing.

According to a second aspect, a communication method is provided. The communication method includes: receiving first indication information, where the first indication information is used to indicate that a system bandwidth of a first-type terminal device is a first system bandwidth, and the first system bandwidth is less than or equal to a CRS mitigation bandwidth; receiving second indication information, where the second indication information is used to indicate that a system bandwidth of a second-type terminal device is a second system bandwidth, and the second-type terminal device can support a network-based CRS mitigation technology; and performing communication on the second system bandwidth based on the second indication information.

According to this embodiment of this application, a terminal device that can support a network-based CRS mitigation technology first receives one piece of the first indication information. For a network device configured with a network-based CRS mitigation technology, to ensure that a terminal device (namely, the first-type terminal device) that cannot support the network-based CRS mitigation technology can also perform correct channel estimation when the network device is in a CRS mitigated state, indication information indicating a bandwidth of the first-type terminal device (namely, the system bandwidth of the first-type terminal device) is sent. The indication information indicates the first system bandwidth that is less than or equal to the CRS mitigation bandwidth, and when the network device is in the CRS mitigated state, the first system bandwidth may be used by the terminal device that cannot support the network-based CRS mitigation technology for communication by using the first system bandwidth. The terminal device that can support the network-based CRS mitigation technology also receives the first indication information, and first performs communication in the first system bandwidth. To ensure communication performance of the terminal device that can support the network-based CRS mitigation technology, the terminal device that can support the network-based CRS mitigation technology further receives the second indication information indicating an actual system bandwidth (namely, the second system bandwidth), so that the terminal device that can support the network-based CRS mitigation technology can perform communication based on the actual system bandwidth.

With reference to the second aspect, in some implementations of the second aspect, the second system bandwidth is greater than the first system bandwidth.

With reference to the second aspect, in some implementations of the second aspect, the receiving second indication information includes: receiving radio resource control RRC information, where the RRC information includes the second indication information; or receiving a media access control MAC control element CE, where the MAC CE includes the second indication information; or receiving downlink control information DCI, where the DCI includes the second indication information.

When communication of the terminal device that cannot support the network-based CRS mitigation technology is ensured, the terminal device that can support the network-based CRS mitigation technology can learn of the actual system bandwidth by using additional signaling, so that the terminal device that can support the network-based CRS mitigation technology can perform communication in the actual system bandwidth.

With reference to the second aspect, in some implementations of the second aspect, the receiving second indication information includes: receiving the second indication information in a random access procedure of the second-type terminal device.

In this embodiment of this application, after receiving the first indication information, the terminal device that can support the network-based CRS mitigation technology temporarily works in the first system bandwidth indicated by the first indication information. After the network device sends, to the terminal device that can support the network-based CRS mitigation technology, the indication information indicating the second system bandwidth, the terminal device that can support the network-based CRS mitigation technology works in the second system bandwidth. Therefore, when the terminal device that can support the network-based CRS mitigation technology performs random access, the second indication information is received, so that the terminal device that can support the network-based CRS mitigation technology can work based on the actual system bandwidth after accessing.

According to a third aspect, a communication method is provided. The communication method includes: receiving first indication information, where the first indication information is used to indicate that a bandwidth of a first-type terminal device is a first system bandwidth, and the first system bandwidth is less than or equal to a CRS mitigation bandwidth; and performing communication in the first system bandwidth based on the first indication information.

According to this embodiment of this application, for a terminal device (namely, the first-type terminal device) that cannot support a network-based CRS mitigation technology, when a network device is configured with the network-based CRS mitigation technology, the terminal device that cannot support the network-based CRS mitigation technology does not know existence of the CRS mitigation technology. Therefore, channel estimation is performed based on a full bandwidth, thereby resulting in an estimation error. Therefore, the network device sends indication information indicating the bandwidth of the first-type terminal device. The indication information indicates the first system bandwidth less than or equal to the CRS mitigation bandwidth, and when the network device is in a CRS mitigated state, the first system bandwidth may be used by the terminal device that cannot support the network-based CRS mitigation technology for communication by using the first system bandwidth. This avoids the estimation error caused by the channel estimation that is performed, based on the system bandwidth, by the terminal device that cannot support the network-based CRS mitigation technology without knowing the existence of the CRS mitigation technology.

With reference to the third aspect, in some implementations of the third aspect, the first indication information is carried in system information that is broadcast, and the system information includes a master information block MIB and/or a system information block SIB.

According to a fourth aspect, a network device is provided. The network device has functions of implementing the network device in the method designs according to the first aspect. The functions may be implemented by hardware, or may be implemented by hardware executing corresponding software. The hardware or the software includes one or more units corresponding to the foregoing functions.

According to a fifth aspect, a terminal device is provided. The terminal device has functions of implementing the terminal device in the method designs according to the second aspect. The functions may be implemented by hardware, or may be implemented by hardware executing corresponding software. The hardware or the software includes one or more units corresponding to the foregoing functions.

According to a sixth aspect, a terminal device is provided. The terminal device has functions of implementing the terminal device in the method designs according to the third aspect. The functions may be implemented by hardware, or may be implemented by hardware executing corresponding software. The hardware or the software includes one or more units corresponding to the foregoing functions.

According to a seventh aspect, a network device is provided. The network device includes a transceiver, a processor, and a memory. The processor is configured to control the transceiver to send and receive a signal. The memory is configured to store a computer program. The processor is configured to invoke the computer program from the memory and run the computer program, so that the network device performs the method according to any one of the first aspect and the possible implementations of the first aspect.

According to an eighth aspect, a terminal device is provided. The terminal device includes a transceiver, a processor, and a memory. The processor is configured to control the transceiver to send and receive a signal. The memory is configured to store a computer program. The processor is configured to invoke the computer program from the memory and run the computer program, so that the terminal device performs the method according to any one of the second aspect and the possible implementations of the second aspect.

According to a ninth aspect, a terminal device is provided. The terminal device includes a transceiver, a processor, and a memory. The processor is configured to control the transceiver to send and receive a signal. The memory is configured to store a computer program. The processor is configured to invoke the computer program from the memory and run the computer program, so that the terminal device performs the method according to any one of the third aspect and the possible implementations of the third aspect.

According to a tenth aspect, a communications apparatus is provided. The communications apparatus may be the network device in the foregoing method designs, or may be a chip disposed in the network device. The communications apparatus includes a processor that is coupled to a memory and may be configured to execute an instruction in the memory, to implement the method performed by the network device according to any one of the first aspect and the possible implementations of the first aspect. Optionally, the communications apparatus further includes the memory. Optionally, the communications apparatus further includes a communications interface, and the processor is coupled to the communications interface.

According to an eleventh aspect, a communications apparatus is provided. The communications apparatus may be the terminal device in the foregoing method designs, or may be a chip disposed in the terminal device. The communications apparatus includes a processor that is coupled to a memory and may be configured to execute an instruction in the memory, to implement the method performed by the terminal device according to any one of the second aspect and the possible implementations of the second aspect. Optionally, the communications apparatus further includes the memory. Optionally, the communications apparatus further includes a communications interface, and the processor is coupled to the communications interface.

According to a twelfth aspect, a communications apparatus is provided. The communications apparatus may be the terminal device in the foregoing method designs, or may be a chip disposed in the terminal device. The communications apparatus includes a processor that is coupled to a memory and may be configured to execute an instruction in the memory, to implement the method performed by the terminal device according to any one of the third aspect and the possible implementations of the third aspect. Optionally, the communications apparatus further includes the memory. Optionally, the communications apparatus further includes a communications interface, and the processor is coupled to the communications interface.

According to a thirteenth aspect, a computer program product is provided. The computer program product includes computer program code, and when the computer program code is run on a computer, the computer is enabled to perform the methods according to the foregoing aspects.

According to a fourteenth aspect, a computer-readable medium is provided. The computer-readable medium stores program code, and when the computer program code is run on a computer, the computer is enabled to perform the methods according to the foregoing aspects.

According to a fifteenth aspect, a chip system is provided. The chip system includes a processor that is configured to support a network device in implementing functions according to the foregoing aspects, for example, generate, receive, send, or process data and/or information according to the foregoing methods. In a possible design, the chip system further includes a memory. The memory is configured to store a program instruction and data that are necessary for the terminal device. The chip system may include a chip, or may include a chip and another discrete device.

According to a sixteenth aspect, a chip system is provided. The chip system includes a processor that is configured to support a terminal device in implementing functions according to the foregoing aspects, for example, generate, receive, send, or process data and/or information according to the foregoing methods. In a possible design, the chip system further includes a memory. The memory is configured to store a program instruction and data that are necessary for the terminal device. The chip system may include a chip, or may include a chip and another discrete device.

### BRIEF DESCRIPTION OF DRAWINGS

FIG. 1 is a schematic diagram of a communications system to which a communication method according to an embodiment of this application is applicable;
FIG. 2 is a schematic diagram of CRS mitigation;
FIG. 3 is a schematic diagram of CRS mitigation and full bandwidth transmission resource mapping;
FIG. 4 is a schematic interaction diagram of a communication method according to an embodiment of this application;
FIG. 5 is a schematic flowchart of a communication method according to another embodiment of this application;
FIG. 6 is a schematic block diagram of a communications apparatus according to an embodiment of this application;
FIG. 7 is a schematic structural diagram of a network device according to an embodiment of this application; and
FIG. 8 is a schematic structural diagram of a terminal device according to an embodiment of this application.

### DESCRIPTION OF EMBODIMENTS

The following describes technical solutions of this application with reference to accompanying drawings.

The technical solutions in the embodiments of this application may be applied to various communications systems, for example, a global system for mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, an LTE-advanced (LTE-Advanced, LTE-A) system, an LTE-A Pro system, a universal mobile telecommunications system (Universal Mobile Telecommunication System, UMTS), a worldwide interoperability for microwave access (Worldwide Interoperability for Microwave Access, WiMAX) communications system, an evolved universal terrestrial radio access network (Evolved Universal Terrestrial Radio Access Network, E-UTRAN) system, a future 5th generation (5th Generation, a 5G) system, or a new radio (New Radio, NR) system.

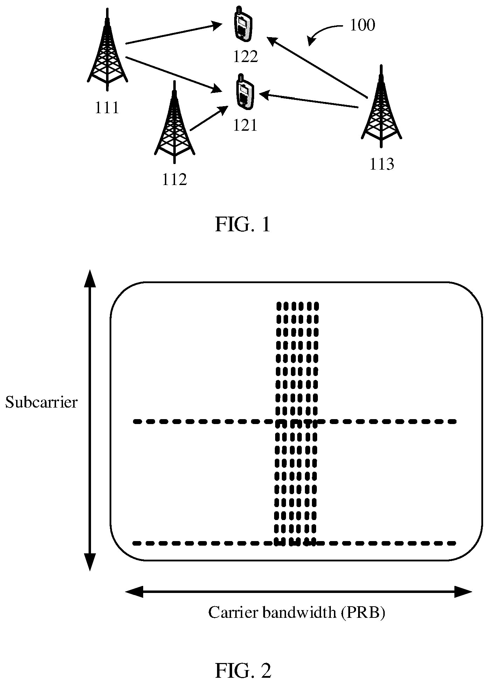

First, for ease of understanding the embodiments of this application, a communications system shown in FIG. 1 is used as an example to describe in detail a communications system to which the embodiments of this application are applicable. FIG. 1 is a schematic diagram of a wireless communications system 100 to which an embodiment of this application is applicable. As shown in FIG. 1, the wireless communications system 100 may include one or more network devices, for example, a network device 111, a network device 112, and a network device 113 shown in FIG. 1. The wireless communications system 100 may further include one or more terminal devices, for example, a terminal device #1 121 and a terminal device #2 122 shown in FIG. 1.

It should be understood that the network device in the wireless communications system may be any device having a wireless sending and receiving function or a chip that may be disposed in the device. The device includes but is not limited to an evolved NodeB (evolved Node B, eNB), a radio network controller (Radio Network Controller, RNC), a NodeB (Node B, NB), a base station controller (Base Station Controller, BSC), a base transceiver station (Base Transceiver Station, BTS), a home base station (for example, a Home evolved NodeB, or a Home Node B, HNB), a baseband unit (BaseBand Unit, BBU), an access point (Access Point, AP) in a wireless fidelity (Wireless Fidelity, WIFI) system, a wireless relay node, a wireless backhaul node, a transmission point (transmission point, TP), a transmission and reception point (transmission and reception point, TRP), or the like, or may be a gNB or a transmission point (TRP or TP) in a 5G system, for example, an NR system, or one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a centralized unit (centralized unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer is eventually converted into information at the PHY layer, or is converted from information at the PHY layer. Therefore, in this architecture, higher layer signaling, such as RRC layer signaling or PHCP layer signaling, may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

It should be further understood that the terminal device in the wireless communications system may also be referred to as user equipment (user equipment, UE), an access terminal, a subscriber unit, a subscriber station, a mobile station, a mobile station, a remote station, a remote terminal, a mobile device, a user terminal, a terminal, a wireless communication device, a user agent, or a user apparatus. The terminal device in the embodiments of this application may be a mobile phone (mobile phone), a tablet (Pad), a computer with a wireless sending and receiving function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future 5G network, a terminal device in a future evolved public land mobile network (Public Land Mobile Network, PLMN), or the like. An application scenario is not limited in the embodiments of this application. In this application, the foregoing terminal device and the chip that can be disposed in the foregoing terminal device are collectively referred to as a terminal device.

In this application, a main concern is about a network device configured with a network-based CRS mitigation technology (which is also referred to as a CRS mitigation technology in the embodiments of this application). For ease of understanding the embodiments of this application, the CRS mitigation technology is first described.

An LTE technology is a high-speed wireless communications standard for mobile phones and data terminals. This technology standard was first proposed by the 3rd generation partnership project (The 3rd Generation Partnership Project, 3GPP) in Release 8 in 2008 and is continuously improved in later releases. Key technologies such as orthogonal frequency division multiplexing (Orthogonal Frequency Division Multiplexing, OFDM) and multi-input multi-output (Multi-input Multi-output, MIMO) are introduced to the LTE system. This significantly increases spectral efficiency and a data transmission rate and supports a plurality of types of bandwidth allocation, and therefore spectrum allocation is more flexible, and a system capacity and system coverage are significantly improved. The LTE system uses a flatter and simpler network architecture. This reduces a quantity of network nodes and system complexity, shortens a system delay, and reduces network deployment and maintenance costs.

In LTE, CRSs of a full bandwidth need to be sent in all downlink subframes by using a cell-specific reference signal (Cell-specific Reference Signal, CRS). The CRS is used in many key tasks, such as cell search, handover, time-frequency synchronization, channel estimation, and radio resource management. However, a density of the CRSs is relatively high. Consequently, some interference is caused to a network and an interference threshold is increased. Particularly, in a medium- and low-load cell, a large part of resources are occupied. Consequently, some interference is caused to a neighboring cell. If CRS transmission can be reduced without affecting a normal related function, inter-cell interference can be reduced, so that the terminal device directly obtains better rate experience.

In the network-based CRS mitigation technology (Network-based CRS mitigation, NW CRS IM), a bandwidth of a cell CRS is conditionally mitigated to a bandwidth of six central resource blocks (resource block, RB), to reduce interference of the medium- and low-load cell to the neighboring cell to some extent, and implement a gain of a data transmission rate of the terminal device. The NW CRS IM can work with high-order modulation to achieve a better interference cancelation effect and extend wider coverage. In addition, compared with original continuous sending of the CRS, with reduction of a transmit bandwidth of the CRS as required, energy consumption of a base station is also reduced to some extent, and some power for the base station is saved. FIG. 2 is a schematic diagram of a CRS mitigation technology. A horizontal axis represents a carrier bandwidth in a unit of a physical resource block (physical resource block, PRB), and a vertical axis represents a subframe (subframes).

In view of the CRS mitigation technology, all policies and operations are based on a network side and a behavior of a terminal device does not need to be adjusted. Therefore, when the terminal device needs a full bandwidth CRS to perform channel estimation, a network needs to correspondingly ensure the full bandwidth CRS of these operations. In other words, CRS bandwidth mitigation can be disabled in some corresponding time periods or even some margins before and after the time periods, and the CRS is sent by using a full bandwidth, thereby ensuring accuracy of the channel estimation of the terminal device.

It should be understood that, if all CRSs are removed like downlink licensed-assisted access (Licensed-Assisted Access, LAA) or like 5G-NR, inter-cell interference caused by the CRSs can be reduced to a maximum extent. However, this means that a terminal device that complies with an original release cannot use a carrier configured with related CRS mitigation. Therefore, if the CRS is mitigated to six central RBs and a specific rule is complied with, the terminal device that complies with the original release can obtain a normal communication service, and impact of inter-cell interference can be reduced to some extent.

To ensure that the network can correctly send the CRS by using the full bandwidth, signaling interaction needs to be performed between the network and the terminal device. However, the signaling is applicable to a terminal device that can support the CRS mitigation technology, but is not applicable to a terminal device that cannot support the network-based CRS mitigation technology. This embodiment of this application mainly focuses on how the two types of terminal devices perform communication in a proper bandwidth in a network device configured with the NW CRS IM technology.

In this embodiment of this application, there are two types of terminal devices. One type of terminal device is the terminal device that can support the network-based CRS mitigation technology. The type of terminal device is denoted as a second-type terminal device, and may also be referred to as capable UE. The other type of terminal device is a conventional terminal device, and may be understood as the terminal device that cannot support the network-based CRS mitigation technology. The type of terminal device is denoted as a first-type terminal device, and may also be referred to as legacy UE. The terminal device that cannot support the network-based CRS mitigation technology may also be understood as a terminal device that does not know the CRS mitigation technology.

It should be understood that in this embodiment of this application, the second-type terminal device and the first-type terminal device are merely used to indicate the terminal device that can support the network-based CRS mitigation technology and the terminal device that cannot support the network-based CRS mitigation technology. This does not limit the protection scope of this application.

Optionally, in the communications system 100 shown in FIG. 1, both the terminal device #1 and the terminal device #2 may be second-type terminal devices, namely, terminal devices that can support the CRS mitigation technology. Alternatively, both the terminal device #1 and the terminal device #2 may be first-type terminal devices, namely, terminal devices that cannot support the CRS mitigation technology. Alternatively, the terminal device #1 is a terminal device that can support the CRS mitigation technology, and the terminal device #2 is a terminal device that cannot support the CRS mitigation technology. Alternatively, the terminal device #2 is a terminal device that can support the CRS mitigation technology, and the terminal device #1 is a terminal device that cannot support the CRS mitigation technology. This is not limited in this embodiment of this application.

Optionally, in the communications system 100 shown in FIG. 1, at least one of the network device 111, the network device 112, and the network device 113 is configured with the CRS mitigation technology.

It should be understood that for ease of understanding, FIG. 1 shows only an example of the terminal device #1, the terminal device #2, and the network device. However, this should not constitute any limitation to this application. The wireless communications system may further include more or fewer network devices, or may include more terminal devices. Network devices communicating with different terminal devices may be a same network device, or may be different network devices. A quantity of the network devices communicating with the different terminal devices may be the same, or may be different. This is not limited in this application.

For the second-type terminal device, a specific rule needs to be complied with in a cell in which the CRS mitigation technology is configured. The following describes the rule that CRS mitigation needs to comply with and an application scope of the CRS mitigation.

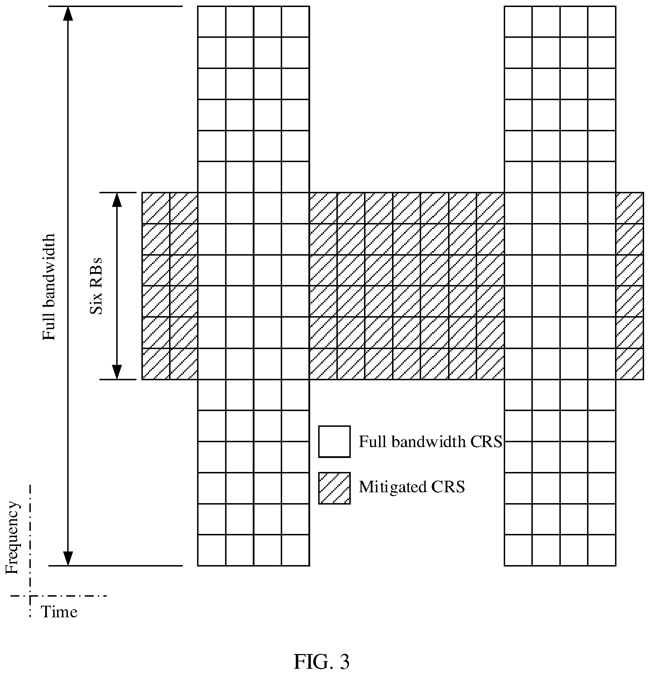

For the application scope of the CRS mitigation to six central RBs, a radio resource control idle (Radio Resource Control IDLE, RRC_IDLE) mode and a radio resource control connected (Radio Resource Control CONNECTED, RRC_CONNECTED) mode are separately described. For the second-type terminal device, the second-type terminal device is configured to use only the six central RBs to implement the CRS mitigation and ensure normal working of the second-type terminal device. However, in the RRC_IDLE mode, some behaviors of the second-type terminal device need to be ensured by using a full bandwidth CRS. For example, when a paging occasion, system information transmission, random access, or the like occurs, the network device needs to send the full bandwidth CRS to ensure that a related behavior of the second-type terminal device can be normally performed. On the other hand, for the second-type terminal device in the RRC_CONNECTED mode, an activated second-type terminal device (configured with discontinuous reception (Discontinuous Reception, DRX)) always requires the full bandwidth CRS to ensure accurate channel estimation and ensure success of positioning measurement. However, a deactivated second-type terminal device does not require the continuous full bandwidth CRS, so that the CRS mitigation can be performed. FIG. 3 is a schematic diagram of resource mapping of the CRS mitigation.

For the first-type of terminal device, impact brought by the network-based CRS mitigation is inevitable. Unlike the second-type terminal device, the first-type terminal device cannot ensure, through signaling interaction with a network, that the network can provide a corresponding full bandwidth CRS when the first-type terminal device uses the full bandwidth CRS. For example, when the network device in which the CRS mitigation technology is configured is in a CRS mitigated state, the first-type terminal device still considers that the full bandwidth CRS exists and performs channel estimation. Consequently, the channel estimation cannot be correctly performed, and performance of the first-type terminal device deteriorates. Therefore, this application provides a communication method. For the first-type terminal device (for example, a terminal device in R14 or a terminal device that complies with a release earlier than R14, or a terminal device that does not support the NW CRS IM in R15), the network device may indicate a mitigated system bandwidth to the first-type terminal device. For the second-type terminal device, the network device may indicate an actual system bandwidth by using additional signaling. Therefore, it can be ensured that the first-type terminal device performs correct channel estimation and it can also be ensured that the second-type terminal device performs communication by using the actual system bandwidth.

It should be noted that in the embodiments of this application, the "first-type terminal device" and the "second-type terminal device" are mentioned for a plurality of times. The descriptions are merely intended to distinguish between the terminal device that cannot support the network-based CRS mitigation technology and the terminal device that can support the network-based CRS mitigation technology, and does not constitute a limitation to the embodiments of this application.

It should be further noted that in the embodiments of this application, the "bandwidth of the first-type terminal device" and the "system bandwidth of the first-type terminal device" are usually interchangeably used. It should be noted that meanings expressed by the terms are consistent. The "bandwidth of the second-type terminal device" and the "system bandwidth of the second-type terminal device" are also usually interchangeably used. It should be noted that meanings expressed by the terms are consistent.

It should be further noted that, in the embodiments of this application, a "protocol" may be a standard protocol in the communications field, for example, may include an LTE protocol, an NR protocol, and a related protocol applied to a future communications system. This is not limited in this application.

It should be further noted that, in the embodiments of this application, nouns "network" and "system" are usually interchangeably used, but meanings of the nouns may be understood by a person skilled in the art. The "network-based CRS mitigation technology" and the "CRS mitigation technology" may be interchangeably used sometimes. It should be noted that meanings expressed by the terms are consistent when differences are not emphasized. "Information (information)", "signal (signal)", "message (message)", and "channel (channel)" may be interchangeably used sometimes. It should be noted that meanings expressed by the terms are consistent when differences of the terms are not emphasized.

It should be noted that the term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. The term "at least one" means one or more. The term "at least one of A and B", similar to the term "A and/or B", describes an association relationship between associated objects and represents that three relationships may exist. For example, at least one of A and B may represent the following three cases: Only A exists, both A and B exist, and only B exists. The following describes in detail the technical solutions provided in this application with reference to the accompanying drawings.

It should be understood that the communication method provided in this application may be applicable to a wireless communications system, for example, the wireless communications system 100 shown in FIG. 1. The terminal device in the embodiments of this application may simultaneously communicate with one or more network devices, and one network device may simultaneously communicate with one or more terminal devices.

Without loss of generality, the following describes the embodiments of this application in detail by using a process of interaction among one first-type terminal device, one second-type terminal device, and one network device as an example. The first-type terminal device and the second-type terminal device may be any terminal device that is in a wireless communications system and that has a wireless connection relationship with one or more network devices. It may be understood that any terminal device in the wireless communications system may implement wireless communication based on a same technical solution. This is not limited in this application.

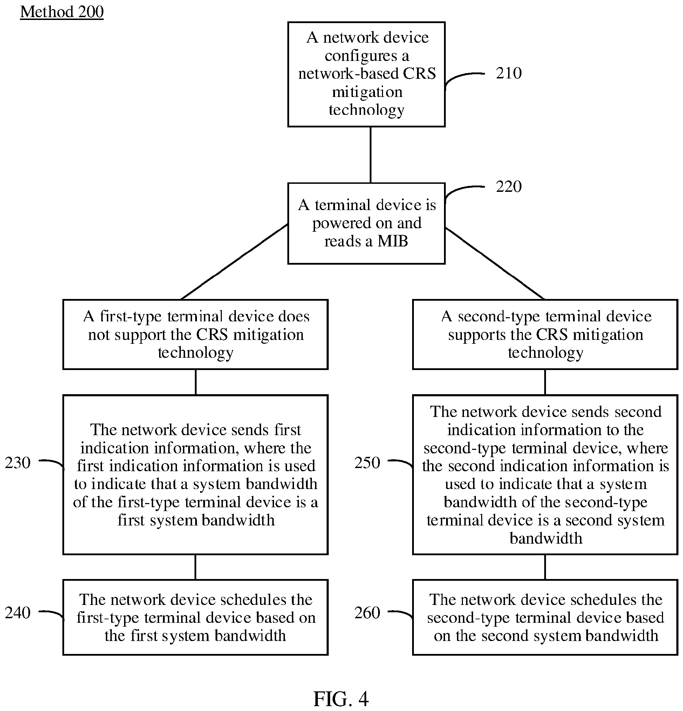

FIG. 4 is a schematic flowchart of a communication method 200 from a perspective of device interaction according to an embodiment of this application. The method 200 is applicable to the communications system shown in FIG. 1. The method 200 includes steps 210 to 260. The following describes the method 200 in detail with reference to FIG. 4.

210: A network device configures a network-based CRS mitigation technology.

The network device is configured with the network-based CRS mitigation technology. The foregoing already describes the CRS mitigation technology. For brevity, details are not described herein again.

The network device sends, as required, a CRS in a bandwidth that is mitigated compared with a system bandwidth. The network device may enable the CRS mitigation technology in one time period or a plurality of time periods. The network device may perform communication in a full bandwidth, or may perform communication on a CRS mitigation bandwidth.

220. A terminal device is powered on and reads a MIB.

To access a network, the terminal device needs to perform procedures such as cell search, cell system information obtaining, and random access. The following describes the foregoing procedures in detail.

### Cell search

Main purposes of the cell search are as follows:
(1) achieving frequency and symbol synchronization (downlink synchronization) with a cell;
(2) obtaining a start location of a downlink frame; and
(3) determining a physical-layer cell identity (Physical-layer Cell Identity, PCI) of the cell.

The terminal device needs to perform the cell search when the terminal device is powered on. In addition, to support mobility (mobility), the terminal device continuously searches for a neighboring cell, achieves synchronization, and estimates quality of a received signal in the cell, to determine whether to perform handover (where the handover is performed when the terminal device is in an RRC_CONNECTED mode) or cell re-selection (where the cell re-selection is performed when the terminal device is in an RRC_IDLE mode).

Specifically, the cell search procedure is similar to that in the prior art, and details are not described herein.

### Cell system information obtaining

After the cell search procedure, the terminal device achieves downlink synchronization with the cell, obtains the PCI of the cell, and detects the start location of the system frame. Then, the terminal device needs to obtain system information (System Information, SI) of the cell, to know how the cell is configured, so that the terminal device is facilitated to access the cell and properly work in the cell.

The system information is cell-level information, that is, takes effect on all terminal devices that access the cell. The system information may be classified into a master information block (Master Information Block, MIB) and a plurality of system information blocks (System Information Block, SIB). Each piece of system information includes a set of a series of parameters related to a function. The network device sends the system information to all terminal devices in the cell through a broadcast channel (Broadcast Channel, BCH). The terminal device may learn of a downlink system bandwidth of the cell by using the received MIB and/or SIB.

In this embodiment of this application, considering that the network device is configured with the CRS mitigation technology, and there are a first-type terminal device and a second-type terminal device, the following separately describes a process of learning of the system bandwidth from a perspective of the first-type terminal device and a perspective of the second-type terminal device.

### First-type terminal device

230: The network device sends first indication information, where the first indication information is used to indicate that a system bandwidth of the first-type terminal device is a first system bandwidth, and the first system bandwidth is less than or equal to a CRS mitigation bandwidth.

In this embodiment of this application, the first-type terminal device represents a conventional terminal device, and may be understood as a terminal device that cannot support the network-based CRS mitigation technology, for example, a terminal device that complies with a release earlier than R14 or a terminal device that cannot support the network-based CRS mitigation technology in R15. The first-type terminal device does not know that the CRS is mitigated to a bandwidth of six central RBs. If the network device uses the CRS mitigation technology, the first-type terminal device still performs channel estimation based on the system bandwidth. Consequently, an estimation error is caused, and performance deteriorates. Therefore, the network device sends the indication information indicating the bandwidth to the first-type terminal device.

To ensure that the first-type terminal device can perform the channel estimation based on a correct system bandwidth, the network device indicates the first system bandwidth that is less than or equal to the CRS mitigation bandwidth. It may be understood that the first system bandwidth is a fake system bandwidth indicated by the network device to the terminal device, and the first system bandwidth is less than or equal to the CRS mitigation bandwidth. For example, if the CRS mitigation bandwidth is only six central RBs, that is, 1.4 MHz, the network device notifies the first-type terminal device that the system bandwidth is only six central RBs, that is, 1.4 MHz.

Optionally, after enabling the CRS mitigation technology, the network device sends the first indication information indicating the first system bandwidth.

Optionally, the first indication information may be carried in the system information.

Specifically, the network device sends, to the terminal device through the broadcast channel, the system information that carries the first indication information. The system information includes the MIB and/or the SIB. In this way, the first-type terminal device may perform CRS channel estimation based on the first system bandwidth indicated by the first indication information.

Optionally, the first indication information may alternatively be carried in a random access procedure of the first-type terminal device.

Optionally, the network device sends, in a first time period, the indication information used to indicate the first system bandwidth, and the network device enables the CRS mitigation technology in a second time period.

For example, when the first-type terminal device already accesses the network device and already serves for a period of time, the network device sends the indication information used to indicate the first system bandwidth. Optionally, when enabling the CRS mitigation technology, the network device sends the first indication information indicating the first system bandwidth. Optionally, when not enabling the CRS mitigation technology, the network device does not send the first indication information indicating the first system bandwidth.

Optionally, the first indication information may further include a length and a start location of the second time period. That is, the first-type terminal device determines a time period for communication in the first system bandwidth based on the length and the start location of the second time period. The first-type terminal device may perform communication in the first system bandwidth only when the network device enables the CRS mitigation technology. When the network device does not enable the CRS mitigation, the first-type terminal device works in an actual system bandwidth.

It should be noted that, when using the first system bandwidth for communication, the first-type terminal device cannot use a frequency band resource other than the first system bandwidth or the CRS mitigation bandwidth, including a physical downlink control channel (physical downlink control channel, PDCCH) and a physical downlink shared channel (physical downlink shared channel, PDSCH).

240: The network device schedules the first-type terminal device based on the first system bandwidth.

An example in which the first-type terminal device performs a complete access service in an LTE system is used. A scheduling procedure is as follows:
(1) The terminal device obtains a physical uplink control channel (Physical Uplink Control Channel, PUCCH) resource, and reports a channel quality indicator (Channel Quality Indicator, CQI)/precoding matrix indicator (Precoding Matrix Indicator, PMI)/rank indication (rank indication, RI) to the network device on a PUCCH channel.
(2) If downlink data scheduling is already performed, the terminal device further needs to feed back a data demodulation result (ACK/NACK).
(3) The network device selects an appropriate modulation and coding scheme based on the CQI/RI/PMI and the ACK/NACK result.
(4) The network device determines, based on a scheduling algorithm, a quantity of resources that can be allocated by the network device.
(5) The network device delivers a physical control channel PDCCH indication: a size and a location of an allocated resource, and a modulation and coding scheme.
(6) The terminal device listens to the physical downlink control channel (physical downlink control channel, PDCCH), and if scheduling is performed, the terminal device demodulates physical downlink shared channel (physical downlink shared channel, PDSCH) information at a specified location based on PDCCH information.

In the foregoing procedure, the network device schedules the first-type terminal device based on the first system bandwidth. It should be understood that the foregoing is merely an example for description, and this embodiment of this application is not limited thereto. When the network device enables the CRS mitigation technology, the first-type terminal device performs communication based on the first system bandwidth. In this case, during scheduling, the network device schedules the first-type terminal device based on the first system bandwidth. When using the first system bandwidth for communication, the first-type terminal device cannot use the frequency band resource other than the first system bandwidth or the CRS mitigation bandwidth, including the PDCCH, the PDSCH, and the like.

The first indication information may be carried in the MIB and/or the SIB. Both the first-type terminal device and the second-type terminal device may learn of the first system bandwidth. The second-type terminal device is a terminal device that can support the network-based CRS mitigation technology. In this embodiment of this application, communication performance of the second-type terminal device can be further ensured. Details are as follows:

### Second-type terminal device

250: The network device sends second indication information to the second-type terminal device, where the second indication information is used to indicate that a system bandwidth of the second-type terminal device is a second system bandwidth.

Optionally, the second system bandwidth is greater than the first system bandwidth.

For the network device configured with the network-based CRS mitigation technology, to ensure that the first-type terminal device (namely, the terminal device that cannot support the network-based CRS mitigation technology) can also perform correct channel estimation when the network device is in a CRS mitigated state, indication information indicating the bandwidth of the first-type terminal device is sent. The indication information indicates the first system bandwidth that is less than or equal to the CRS mitigation bandwidth, and when the network device is in the CRS mitigated state, the first system bandwidth may be used by the terminal device that cannot support the network-based CRS mitigation technology for communication. The second-type terminal device (namely, the terminal device that can support the network-based CRS mitigation technology) also receives the first indication information, and first performs communication in the first system bandwidth. To ensure communication performance of the second-type terminal device, the network device sends, to the second-type terminal device, the second indication information indicating an actual system bandwidth (namely, the second system bandwidth), so that the second-type terminal device can perform communication based on the actual system bandwidth, thereby ensuring communication performance.

Optionally, the second indication information is carried in the system information.

Specifically, before the second-type terminal device performs random access, the network device sends, to the second-type terminal device through the broadcast channel, the system information that carries the second indication information, and the system information includes the MIB and/or the SIB. In this way, after the second-type terminal device performs the random access, the second-type terminal device can perform communication based on the actual system bandwidth.

Optionally, after the second-type terminal device accesses the network device, the network device sends the second indication information.

For example, after the second-type terminal device already accesses the network device and already serves for a period of time, the network device sends the indication information used to indicate the second system bandwidth after sending the first indication information. Optionally, after the network device enables the CRS mitigation technology, the network device sends the first indication information and the second indication information. Optionally, when the network device does not send the first indication information, the network device may not send the second indication information.

Optionally, the network device sends the first indication information in the first time period, and sends the second indication information in a third time period. For the second-type terminal device, the second-type terminal device temporarily performs communication in the first system bandwidth in a time period between the first time period and the third time period.

To ensure that the second-type terminal device can perform communication based on the actual system bandwidth, a shorter interval between the first time period and the third time period is better.

Optionally, the network device enables the CRS mitigation technology in a time period between the first time period and the third time period.

After the network device sends the information indicating the first system bandwidth, the network device enables the CRS mitigation technology. In this way, even if the second-type terminal device performs communication in the first system bandwidth, communication performance can also be ensured.

Optionally, when the second-type terminal device performs the random access, the network device sends the second indication information to the terminal device.

After receiving the first indication information, the second-type terminal device temporarily works in the first system bandwidth indicated by the first indication information. After the network device sends the indication information indicating the second system bandwidth to the second-type terminal device, the second-type terminal device works in the second system bandwidth. Therefore, when performing the random access, the second-type terminal device receives the second indication information, so that the second-type terminal device can work based on the actual system bandwidth after accessing. The following briefly describes the random access.

### Random access

After the cell search procedure, the terminal device already achieves the downlink synchronization with the cell. Therefore, the terminal device can receive downlink data. However, the terminal device can perform uplink transmission only after achieving uplink synchronization with the cell. The terminal device establishes a connection to the cell through the random access procedure (Random Access Procedure), and achieves the uplink synchronization.

One of main purposes of the random access is to achieve the uplink synchronization. In the random access procedure, the second indication information is sent to the second-type terminal device.

Optionally, the second indication information is carried in at least one of the following three pieces of signaling: radio resource control RRC, a media access control MAC control element CE, and downlink control information DCI.

The radio resource control (radio resource control, RRC) may be responsible for broadcasting network system information to the terminal device. After an RRC link is established, the network may indicate the actual system bandwidth of the second-type terminal device by using the RRC signaling. Then, the second-type terminal device can perform communication in the actual system bandwidth.

The downlink control information (downlink control information, DCI) may be, for example, DCI in an LTE protocol or an NR protocol, or may be other signaling that can be used to carry the downlink control information and that is transmitted on a physical downlink control channel.

It should be understood that the physical downlink control channel herein may be a PDCCH and an enhanced physical downlink control channel (enhanced PDCCH, EPDCCH) defined in the LTE protocol or the NR protocol, or may be a PDCCH in NR, or another downlink channel that has the foregoing function and that is defined as the network evolves.

260: The network device schedules the second-type terminal device based on the second system bandwidth.

An example in which the second-type terminal device performs a complete access service in the LTE system is used. An uplink scheduling procedure is as follows:
(1) The network device obtains uplink channel quality of the terminal device by measuring a CRS.
(2) If the terminal device sends data for the first time, the terminal device needs to send a scheduling request (Scheduling Request, SR) on a physical uplink control channel (Physical Uplink Control Channel, PUCCH), to notify the network device that there is data needed to be sent.
(3) The network device selects an appropriate modulation and coding scheme based on a measured signal to interference plus noise ratio (Signal to Interference plus Noise Ratio, SINR).
(4) The network device determines, based on a scheduling algorithm, a quantity of resources that can be allocated by the network device.
(5) The network device delivers a control channel PDCCH indication: a size and a location of an allocated resource, and a modulation and coding scheme (Modulation and Coding Scheme, MCS).
(6) The terminal device listens to a PDCCH channel, and if scheduling is performed, the terminal device sends PUSCH data at a specified location based on PDCCH information.
(7) The network device sends an ACK/NACK through the PUCCH.

In the foregoing procedure, the network device schedules the second-type terminal device based on the second system bandwidth. It should be understood that the foregoing is merely an example for description, and this embodiment of this application is not limited thereto. In this embodiment of this application, the network device knows that the second system bandwidth is the same as the bandwidth provided by the network device, and the network device schedules the second-type terminal device based on the second system bandwidth or the actual system bandwidth.

It should be noted that, in the scheduling procedure, the network device sends the first indication information and the second indication information. Optionally, in the scheduling procedure, the network device enables the CRS mitigation technology, and the network device first sends the first indication information indicating the first system bandwidth, and then sends the second indication information indicating the second system bandwidth.

It should be understood that the specific examples in the embodiments of this application are merely intended to help a person skilled in the art better understand the embodiments of this application, rather than limit the scope of the embodiments of this application.

According to this embodiment of this application, for the network device configured with the network-based CRS mitigation technology, on one hand, before the network device is in the CRS mitigated state, the network device sends one piece of indication information. The indication information indicates the first system bandwidth that is less than or equal to the CRS mitigation bandwidth, and when the network device is in the CRS mitigated state, the first system bandwidth may be used by the terminal device that cannot support the network-based CRS mitigation technology for communication. This avoids an estimation error caused by channel estimation that is performed, based on the system bandwidth, by the terminal device that cannot support the network-based CRS mitigation technology without knowing existence of the CRS mitigation technology. On the other hand, in this embodiment of this application, the actual system bandwidth of the terminal device that can support the network-based CRS mitigation technology is notified by using additional signaling, so that the terminal device that can support the network-based CRS mitigation technology can perform communication based on the actual system bandwidth. In addition, the network device can know a difference between the first system bandwidth and the actual system bandwidth, and the network device schedules the first-type terminal device based on the first system bandwidth. The network device can know that the second system bandwidth is the same as the actual system bandwidth, and schedule the second-type terminal device based on the second system bandwidth.

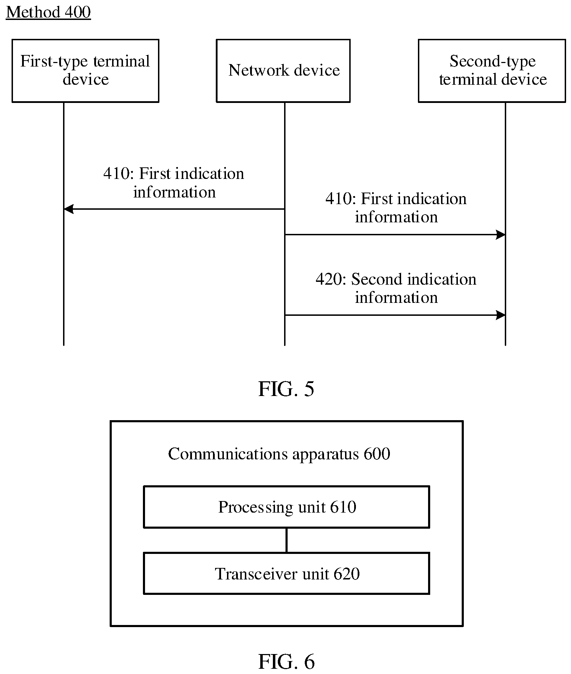

FIG. 5 is a schematic flowchart of a communication method 400 from a perspective of device interaction according to an embodiment of this application. As shown in FIG. 5, the method 400 may include steps 410 to 420.

410: Send first indication information, where the first indication information is used to indicate that a system bandwidth of a first-type terminal device is a first system bandwidth, and the first system bandwidth is less than or equal to a CRS mitigation bandwidth.

According to this embodiment of this application, for a network device configured with a network-based CRS mitigation technology, the network device sends one piece of indication information. The indication information indicates the first system bandwidth that is less than or equal to a CRS mitigation bandwidth, and when the network device is in a CRS mitigated state, the first system bandwidth may be used by a terminal device that cannot support the network-based CRS mitigation technology for communication by using the first system bandwidth. This avoids an estimation error caused by channel estimation that is performed, based on the system bandwidth, by the terminal device that cannot support the network-based CRS mitigation technology without knowing existence of the CRS mitigation technology.

Optionally, when enabling the CRS mitigation technology, the network device sends the first indication information.

It should be noted that the network device may send the first indication information before the first-type terminal device performs random access, and/or in a random access procedure, and/or after random access, and/or in a scheduling procedure. This is not limited in this embodiment of this application.

Step 410 is similar to step 230 in the method 200. For brevity, details are not described herein again.

420: Send second indication information to a second-type terminal device, where the second indication information is used to indicate that a system bandwidth of the second-type terminal device is a second system bandwidth, and the second-type terminal device can support the network-based CRS mitigation technology.

To ensure communication performance of a terminal device that can support the CRS mitigation technology, in this embodiment of this application, an actual system bandwidth of the terminal device that can support the network-based CRS mitigation technology is notified by using additional signaling, so that the terminal device that can support the network-based CRS mitigation technology can perform communication based on the actual system bandwidth.

It should be noted that the network device may send the second indication information before the second-type terminal device performs random access, and/or in a random access procedure of the second-type terminal device, and/or after the second-type terminal device performs the random access, and/or in a scheduling procedure. This is not limited in this embodiment of this application.

It should be further noted that access states of the first-type terminal device and the second-type terminal device are not limited in this application. For example, the first-type terminal device may be before the random access, or in the random access procedure, or already accesses the network device and already serves for a period of time. Alternatively, the second-type terminal device may be before the random access, or in the random access procedure, or already accesses the network device and already serves for a period of time.

It should be further noted that, a time at which the network device enables the CRS mitigation technology is not limited in this application. For example, the CRS mitigation technology may be enabled before the terminal device accesses, or the CRS mitigation technology may be enabled in a procedure in which the terminal device accesses, or the CRS mitigation technology may be enabled after the terminal device already accesses.

Step 420 is similar to step 250 in the method 200. For brevity, details are not described herein again.

Optionally, the second-type terminal device is scheduled based on the second system bandwidth.

In this embodiment of this application, the network device can know that the second system bandwidth is a working bandwidth provided by the network device. The network device schedules, based on the second system bandwidth, the terminal device (namely, the second-type terminal device) that can support the network-based CRS mitigation technology, thereby ensuring communication performance of the terminal device that can support the network-based CRS mitigation technology.

Specifically, this step is similar to step 260 in the method 200. For brevity, details are not described herein again.

Optionally, the first-type terminal device is scheduled based on the first system bandwidth.

In this embodiment of this application, the network device can know that the first system bandwidth is different from the working bandwidth provided by the network device. The network device schedules, based on the first system bandwidth, the terminal device (namely, the first-type terminal device) that cannot support the network-based CRS mitigation technology, thereby ensuring that the terminal device that cannot support the network-based CRS mitigation technology performs correct channel estimation in a period in which the network device enables the CRS mitigation technology.

Specifically, this step is similar to step 240 in the method 200. For brevity, details are not described herein again.

Optionally, the sending second indication information to a second-type terminal device includes: sending radio resource control RRC information to the second-type terminal device, where the RRC information includes the second indication information; or sending a media access control MAC control element CE to the second-type terminal device, where the MAC CE includes the second indication information; or sending downlink control information DCI to the second-type terminal device, where the DCI includes the second indication information.

When communication of the terminal device that cannot support the network-based CRS mitigation technology is ensured, the terminal device that can support the network-based CRS mitigation technology can learn of the actual system bandwidth by using additional signaling, so that the terminal device that can support the network-based CRS mitigation technology can perform communication in the actual system bandwidth.

Optionally, the first indication information is carried in system information that is broadcast, and the system information is a master information block MIB or a system information block SIB.

According to this embodiment of this application, for the network device configured with the network-based CRS mitigation technology, on one hand, before the network device is in the CRS mitigated state, the network device sends one piece of indication information. The indication information indicates the first system bandwidth that is less than or equal to the CRS mitigation bandwidth, and when the network device is in a CRS mitigated state, the first system bandwidth may be used by the terminal device that cannot support the network-based CRS mitigation technology for communication by using the first system bandwidth. This avoids an estimation error caused by channel estimation that is performed, based on the system bandwidth, by the terminal device that cannot support the network-based CRS mitigation technology without knowing existence of the CRS mitigation technology. On the other hand, in this embodiment of this application, the actual system bandwidth of the terminal device that can support the network-based CRS mitigation technology is notified by using additional signaling, so that the terminal device that can support the network-based CRS mitigation technology can perform communication based on the actual system bandwidth. In addition, the network device can know a difference between the first system bandwidth and the actual system bandwidth.

It should be understood that, for only ease of understanding, the foregoing describes in detail the communication method provided in the embodiments of this application by using interaction between the network device and the terminal device as an example. However, this should not constitute any limitation to this application.

It should be understood that sequence numbers of the foregoing processes do not mean execution sequences in various embodiments of this application. The execution sequences of the processes should be determined based on functions and internal logic of the processes, and should not be construed as any limitation to the implementation processes of the embodiments of this application.

The foregoing describes in detail the communication methods in the embodiments of this application with reference to FIG. 2 to FIG. 5. The following describes in detail the communications apparatuses in the embodiments of this application with reference to FIG. 6 to FIG. 8.

FIG. 6 is a schematic block diagram of a communications apparatus according to an embodiment of this application. As shown in FIG. 6, the communications apparatus 600 may include a processing unit 610 and a transceiver unit 620.

In a possible design, the communications apparatus 600 may be a network device or a chip configured in a network device.

A communication method, including:
the transceiver unit 620 is configured to send first indication information, where the first indication information is used to indicate that a system bandwidth of a first-type terminal device is a first system bandwidth, and the first system bandwidth is less than or equal to a cell-specific reference signal CRS mitigation bandwidth; and
the transceiver unit 620 is further configured to send second indication information to a second-type terminal device, where the second indication information is used to indicate that a system bandwidth of the second-type terminal device is a second system bandwidth, and the second-type terminal device can support the network-based CRS mitigation technology.

Optionally, the processing unit 610 is configured to schedule the second-type terminal device based on the second system bandwidth.

Optionally, the processing unit 610 is configured to schedule the first-type terminal device based on the first system bandwidth.

Optionally the processing unit is configured to: receive radio resource control RRC information, where the RRC information includes the second indication information; or send a media access control MAC control element CE to the second-type terminal device, where the MAC CE includes the second indication information; or send downlink control information DCI to the second-type terminal device, where the DCI includes the second indication information.

Optionally, the first indication information is carried in system information that is broadcast, and the system information includes a master information block MIB and/or a system information block SIB.

Optionally, the transceiver unit 620 is specifically configured to: send the second indication information to the second-type terminal device in a random access procedure of the second-type terminal device.

Specifically, the communications apparatus 600 may correspond to the network device in the communication method 200 and the method 400 according to the embodiments of this application. The communications apparatus 600 may include modules configured to perform the methods performed by the network device in the method 200 and the method 400. In addition, the modules in the communications apparatus 600 and the foregoing other operations and/or functions are separately used to implement corresponding procedures of the method 200 and the method 400. Specifically, the processing unit 610 is configured to perform steps 220, 240, and 260 in the method 200. The transceiver unit 620 is configured to perform step 230 or 250 in the method 200. A specific process in which the units perform the foregoing corresponding steps is described in detail in the method 200 and the method 400. For brevity, details are not described herein again.

In a possible design, the communications apparatus 600 may be a terminal device or a chip configured in a terminal device.

A communication method, including:
the transceiver unit 620 is configured to receive first indication information, where the first indication information is used to indicate that a system bandwidth of a first-type terminal device is a first system bandwidth, and the first system bandwidth is less than or equal to a CRS mitigation bandwidth; and
the processing unit 610 is configured to perform communication in the first system bandwidth based on the first indication information.

Optionally, the first indication information is carried in system information that is broadcast, and the system information includes a master information block MIB and/or a system information block SIB.

Specifically, the communications apparatus 600 may correspond to the first-type terminal device in the communication method 200 and the method 400 according to the embodiments of this application. The communications apparatus 600 may include modules configured to perform the method performed by the first-type terminal device in the method 200 and the method 400. In addition, the modules in the communications apparatus 600 and the foregoing other operations and/or functions are separately used to implement corresponding procedures of the method 200 and the method 400. Specifically, the processing unit 610 is configured to perform step 240 in the method 200, the transceiver unit 620 is configured to perform step 230 in the method 200. A specific process in which the units perform the foregoing corresponding steps is described in detail in the method 200 and the method 400. For brevity, details are not described herein again.

In a possible design, the communications apparatus 600 may be a terminal device or a chip configured in a terminal device.

A communication method, including:
the transceiver unit 620 is configured to receive first indication information, where the first indication information is used to indicate that a system bandwidth of a first-type terminal device is a first system bandwidth, and the first system bandwidth is less than or equal to a CRS mitigation bandwidth; and
the transceiver unit 620 is configured to receive second indication information, where the second indication information is used to indicate that a system bandwidth of a second-type terminal device is a second system bandwidth, and the second-type terminal device can support a network-based CRS mitigation technology; and
the processing unit 610 is configured to perform communication on the second system bandwidth based on the second indication information.

Optionally, the transceiver unit 620 is specifically configured to receive radio resource control RRC information, where the RRC information includes the second indication information; or receive a media access control MAC control element CE, where the MAC CE includes the second indication information; or receive downlink control information DCI, where the DCI includes the second indication information.

Optionally, the transceiver unit 620 is specifically configured to receive the second indication information in a random access procedure of the second-type terminal device.

Specifically, the communications apparatus 600 may correspond to the second-type terminal device in the communication method 200 and the method 400 according to the embodiments of this application. The communications apparatus 600 may include modules configured to perform the method performed by the second-type terminal device in the method 200 and the method 400. In addition, the modules in the communications apparatus 600 and the foregoing other operations and/or functions are separately used to implement corresponding procedures of the method 200 and the method 400. Specifically, the processing unit 610 is configured to perform step 260 in the method 200, the transceiver unit 620 is configured to perform step 250 in the method 200. A specific process in which the units perform the foregoing corresponding steps is described in detail in the method 200 and the method 400. For brevity, details are not described herein again.

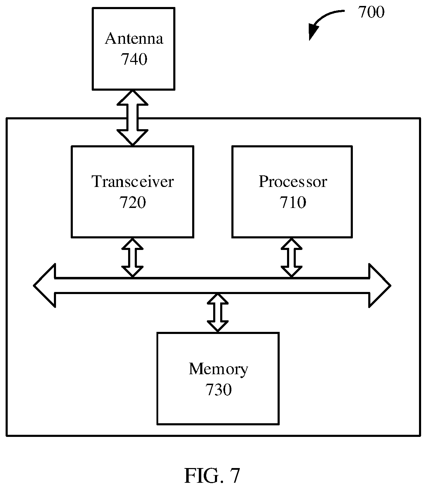

FIG. 7 is a schematic structural diagram of a network device 700 according to an embodiment of this application. As shown in FIG. 7, the network device 700 includes a processor 710 and a transceiver 720. Optionally, the network device 700 further includes a memory 730. The processor 710, the transceiver 720, and the memory 730 communicate with each other through an internal connection channel to transmit a control signal and/or a data signal. The memory 730 is configured to store a computer program. The processor 710 is configured to invoke the computer program from the memory 730 and run the computer program to control the transceiver 720 to send and receive a signal.

The processor 710 and the memory 730 may be integrated into a processing apparatus. The processor 710 is configured to execute program code stored in the memory 730 to implement the foregoing functions. During specific implementation, the memory 730 may alternatively be integrated into the processor 710, or may be independent of the processor 710.

The network device may further include an antenna 740, configured to send, by using a radio signal, downlink data or downlink control signaling output by the transceiver 720.

Specifically, the network device 700 may correspond to the network device in the communication method 200 according to the embodiments of this application, and the network device 700 may include modules configured to perform the method performed by the network device in the communication method 200. In addition, the modules in the network device 700 and the foregoing other operations and/or functions are separately used to implement corresponding procedures of the communication method 200. Specifically, the memory 730 is configured to store program code, so that when executing the program code, the processor 710 performs steps 220, 240, and 260 in the method 200, and controls the transceiver 720 to perform step 230 or 250 in the method 200 through the antenna 740. A specific process in which the modules perform the foregoing corresponding steps is described in detail in the method 200. For brevity, details are not described herein again.

Alternatively, the network device 700 may correspond to the network device in the method 400 according to the embodiments of this application, and the network device 700 may include modules configured to perform the method performed by the network device in the communication method 400 in FIG. 5. In addition, the modules in the network device 700 and the foregoing other operations and/or functions are separately used to implement corresponding procedures of the communication method 400 in FIG. 5. A specific process in which the modules perform the foregoing corresponding steps is described in detail in the method 400. For brevity, details are not described herein again.

It should be understood that, the processor in the embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA), or another programmable logical device, discrete gate or transistor logical device, discrete hardware component, or the like. The general-purpose processor may be a microprocessor, or the processor may be any conventional processor or the like.

It may be further understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitative description, many forms of random access memories (random access memory, RAM) may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

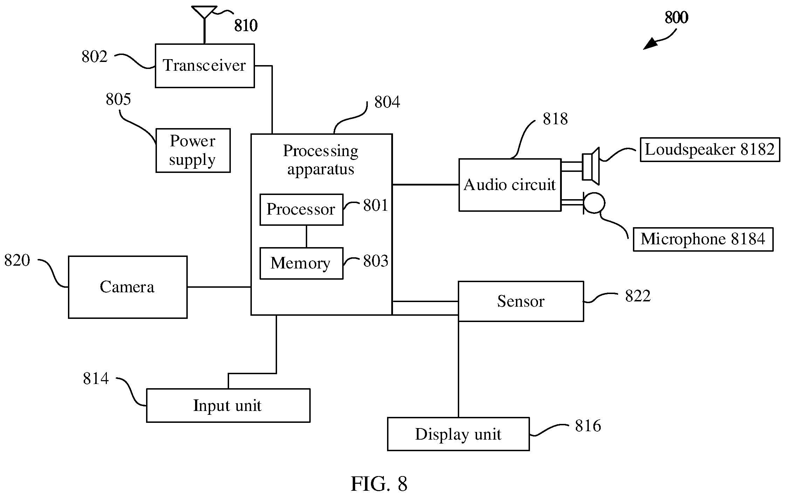

FIG. 8 is a schematic structural diagram of a terminal device 800 according to an embodiment of this application. As shown in FIG. 8, the terminal device 800 includes a processor 801 and a transceiver 802. Optionally, the terminal device 800 further includes a memory 803. The processor 802, the transceiver 802, and the memory 803 communicate with each other through an internal connection path, to transfer a control signal and/or a data signal. The memory 803 is configured to store a computer program. The processor 801 is configured to invoke the computer program from the memory 803 and run the computer program, to control the transceiver 802 to send and receive a signal.

The processor 801 and the memory 803 may be integrated into a processing apparatus 804. The processor 801 is configured to execute program code stored in the memory 803 to implement the foregoing functions. During specific implementation, the memory 803 may alternatively be integrated into the processor 801, or may be independent of the processor 801. The terminal device 800 may further include an antenna 810, configured to send, by using a radio signal, uplink data or uplink control signaling output by the transceiver 802.

Specifically, the terminal device 800 may correspond to the second-type terminal device or the first-type terminal device in the communication method 200 according to the embodiments of this application, and the terminal device 800 may include modules configured to perform the method performed by the second-type terminal device or the first-type terminal device in the communication method 200. In addition, the modules in the terminal device 800 and the foregoing other operations and/or functions are separately used to implement corresponding procedures of the communication method 200. Specifically, the memory 803 is configured to store the program code, so that when executing the program code, the processor 801 performs step 240 or 260 in the method 200, and controls the transceiver 802 to perform step 230 or step 250 in the method 200. A specific process in which the modules perform the foregoing corresponding steps is described in detail in the method 200. For brevity, details are not described herein again.

Alternatively, the terminal device 800 may correspond to the second-type terminal device or the first-type terminal device in the communication method 400 according to the embodiments of this application, and the terminal device 800 may include modules configured to perform the method performed by the second-type terminal device or the first-type terminal device in the communication method 400 in FIG. 5. In addition, the modules in the terminal device 800 and the foregoing other operations and/or functions are separately used to implement corresponding procedures of the communication method 400 in FIG. 5.

The processor 801 may be configured to perform an action implemented inside the terminal in the foregoing method embodiments, and the transceiver 802 may be configured to perform an action of transmission or sending from the terminal to the network device in the foregoing method embodiments. For details, refer to the descriptions in the foregoing method embodiments. Details are not described herein again.

The processor 801 and the memory 803 may be integrated into one processing apparatus. The processor 801 is configured to execute the program code stored in the memory 803 to implement the foregoing functions. During specific implementation, the memory 803 may alternatively be integrated into the processor 801.

The terminal device 800 may further include a power supply 805, configured to supply power to various components or circuits in the terminal.

In addition, to improve functions of the terminal device, the terminal device 800 may further include one or more of an input unit 814, a display unit 816, an audio circuit 818, a camera 820, a sensor 822, and the like, and the audio circuit may further include a loudspeaker 8182, microphone 8184, and the like.

According to the methods provided in the embodiments of this application, this application further provides a computer program product. The computer program product includes computer program code. When the computer program code is run on a computer, the computer is enabled to perform the method in the embodiment shown in FIG. 4 or FIG. 5.

According to the methods provided in the embodiments of this application, this application further provides a computer-readable medium. The computer-readable medium stores program code. When the program code is run on a computer, the computer is enabled to perform the method in the embodiment shown in FIG. 4 or FIG. 5.

According to the methods provided in the embodiments of this application, this application further provides a system. The system includes the foregoing network device and one or more terminal devices. All or some of the foregoing embodiments may be implemented by using software, hardware, firmware, or any combination thereof. When software is used to implement the embodiments, all or some of the foregoing embodiments may be implemented in a form of a computer program product. The computer program product includes one or more computer instructions. When the computer program instructions are loaded or executed on a computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending first indication information, wherein the first indication information is used to indicate that a system bandwidth of a first-type terminal device is a first system bandwidth, and the first system bandwidth is less than or equal to a cell-specific reference signal CRS mitigation bandwidth; and
sending second indication information to a second-type terminal device, wherein the second indication information is used to indicate that a system bandwidth of the second-type terminal device is a second system bandwidth, and the second-type terminal device supports a network-based CRS mitigation technology.

2. The communication method according to claim 1, wherein the communication method further comprises:
scheduling the second-type terminal device based on the second system bandwidth.

3. The communication method according to claim 1 or 2, wherein the communication method further comprises:
scheduling the first-type terminal device based on the first system bandwidth.

4. The communication method according to any one of claims 1 to 3, wherein the second system bandwidth is greater than the first system bandwidth.

5. The communication method according to any one of claims 1 to 4, wherein the sending second indication information to a second-type terminal device comprises:
sending radio resource control RRC information to the second-type terminal device, wherein the RRC information comprises the second indication information; or
sending a media access control MAC control element CE to the second-type terminal device, wherein the MAC CE comprises the second indication information; or
sending downlink control information DCI to the second-type terminal device, wherein the DCI comprises the second indication information.

6. The communication method according to any one of claims 1 to 5, wherein the first indication information is carried in system information that is broadcast, and the system information comprises a master information block MIB and/or a system information block SIB.

7. The communication method according to any one of claims 1 to 6, wherein the sending second indication information to a second-type terminal device comprises:
sending the second indication information to the second-type terminal device in a random access procedure of the second-type terminal device.

8. A communication method, comprising:
receiving first indication information, wherein the first indication information is used to indicate that a system bandwidth of a first-type terminal device is a first system bandwidth, and the first system bandwidth is less than or equal to a CRS mitigation bandwidth;
receiving second indication information, wherein the second indication information is used to indicate that a system bandwidth of a second-type terminal device is a second system bandwidth, and the second-type terminal device can support a network-based CRS mitigation technology; and
performing communication on the second system bandwidth based on the second indication information.

9. The communication method according to claim 8, wherein the second system bandwidth is greater than the first system bandwidth.

10. The communication method according to claim 8 or 9, wherein the receiving second indication information comprises:
receiving radio resource control RRC information, wherein the RRC information comprises the second indication information; or
receiving a media access control MAC control element CE, wherein the MAC CE comprises the second indication information; or
receiving downlink control information DCI, wherein the DCI comprises the second indication information.

11. The communication method according to any one of claims 8 to 10, wherein the receiving second indication information comprises:
receiving the second indication information in a random access procedure of the second-type terminal device.

12. A communication method, comprising:
receiving first indication information, wherein the first indication information is used to indicate that a system bandwidth of a first-type terminal device is a first system bandwidth, and the first system bandwidth is less than or equal to a CRS mitigation bandwidth; and
performing communication in the first system bandwidth based on the first indication information.

13. The communication method according to claims 12, wherein the first indication information is carried in system information that is broadcast, and the system information comprises a master information block MIB and/or a system information block SIB.

14. A communications apparatus, comprising:
a processor, configured to: couple to a memory, and execute an instruction in the memory, to implement the method according to any one of claims 1 to 13.

15. The communications apparatus according to claim 14, further comprising:
the memory.
